# EUROPEAN PATENT APPLICATION

(11) **EP 2 042 754 A2**
(43) Date of publication of application: **01.04.2009**
(21) Application number: 08016291.0
(22) Date of filing: 16.09.2008
(51) Int. Cl.: F16C 19/16, F16C 33/38, F16C 33/58, F16C 43/06

(54) **Angular contact ball bearing**

(30) Priority: 26.09.2007 JP 2007248382
(71) Applicant: JTEKT Corporation, Osaka-shi Osaka 542-8502 (JP)
(72) Inventor: Koda, Kanichi, Chuo-ku, Osaka-shi, Osaka 542-8502 (JP)
(74) Representative: Hager, Thomas Johannes

(57) **Abstract**

An angular contact ball bearing (1) includes; an inner ring (3) including a shoulder portion-side end surface; an outer ring (2) which includes a counterbore-side smaller-diameter portion (2b) and a counterbore-side end surface disposed axially inwardly of the shoulder portion-side end surface of the inner ring; a plurality of balls (4) arranged in a circular row between the outer ring and inner rings; a cage (5) for holding the balls; and a cylindrical guide portion (6) which is provided at and communicates with the counterbore-side smaller-diameter portion and guides a ball-cage assembly in which the balls and the cage are assembled together when the ball-cage assembly is inserted into the outer ring. When the ball-cage assembly is inserted into the outer ring disposed horizontally, the ball-cage assembly is supported by the counterbore-side smaller-diameter portion and is prevented from being inclined by the guide portion.

## Description

### BACKGROUND OF THE INVENTION

This invention relates to an angular contact ball bearing, and more particularly to an angular contact ball bearing having a lightweight design.

An angular contact ball bearing including a plurality of balls (disposed between an outer ring and an inner ring) and a cage holding these balls has been extensively used in a bearing device for supporting a differential case on a differential carrier (see JP-A-2004-211856) and other bearing devices.

Various rolling bearings have been required to have a lightweight design, and with respect to an angular contact ball bearing, it may be proposed to reduce an axial dimension of an outer ring and/or an inner ring in order to achieve a lightweight design. On the other hand, with respect to the angular contact ball bearing, it is a common practice to first prepare an outer ring assembly in which the outer ring, the cage and the balls are assembled together and then to assemble the ball bearing. However, the method of achieving the lightweight design by reducing the axial dimension of the outer ring has a problem that at the time of incorporating a ball-cage assembly, in which the balls and the cage are assembled together, into the outer ring, the balls are unstable and therefore are liable to move.

### SUMMARY OF THE INVENTION

It is an object of this invention to provide an angular contact ball bearing in which its lightweight design is achieved by reducing an axial dimension of an outer ring, and also the ability of assembling an outer ring assembly will not be lowered.

An angular contact ball bearing according to a first aspect of the present invention includes:
an inner ring including a shoulder portion-side end surface;
an outer ring which includes a counterbore-side smaller-diameter portion and a counterbore-side end surface disposed axially inwardly of the shoulder portion-side end surface of the inner ring;
a plurality of balls arranged in a circular row between the outer ring and inner rings;
a cage for holding the balls; and
a cylindrical guide portion which is provided at and communicates with the counterbore-side smaller-diameter portion and guides a ball-cage assembly in which the balls and the cage are assembled together when the ball-cage assembly is inserted into the outer ring,
wherein when the ball-cage assembly is inserted into the outer ring disposed horizontally, the ball-cage assembly is supported by the counterbore-side smaller-diameter portion and is prevented from being inclined by the guide portion.
The angular contact ball bearing according to a second aspect of the invention, relations 0.35Bd ≤ δA ≤ 0.5Bd and RD ≤ OD ≤ 1.1RD are satisfied, where δA represents a projecting amount of each ball from the outer ring in a state that the ball-cage assembly is placed on the counterbore-side smaller diameter portion, Bd represents a diameter of the ball, OD represents an inner diameter of the guide portion, and RD represents a diameter of a circle circumscribing the circular row of balls.
The angular contact ball bearing according to a third aspect of the invention, wherein 0.35Bd ≤ δA ≤ 0.45Bd and RD ≤ OD ≤ 1.05RD are satisfied.

The counterbore-side end surface of the outer ring is disposed axially inwardly of the shoulder portion-side end surface of the inner ring, and with this construction a lightweight design is achieved. Further, by providing the guide portion for guiding the ball-cage assembly, the ability of assembling the outer ring assembly (comprising the outer ring and the ball-cage assembly) which would otherwise be adversely affected by the lightweight design will not be lowered. Furthermore, the assembling ability can be further secured by setting the amount (δA) of projecting of the balls and the diameter (OD) of the shoulder portion of the outer ring to the required values.

If the centers of the balls are disposed outwardly of the end surface of the outer ring, the assembling condition becomes unstable, and therefore the amount (δA) of projecting of the balls is not larger than 0.5 times Bd. And, in order to secure the lightweight design of the outer ring, the amount (δA) of projecting of the balls is not smaller than 0.35 times Bd. With respect to the diameter (OD) of the shoulder portion of the outer ring, if it is too large, the assembling condition becomes unstable, and therefore this diameter (OD) is not larger than 1.1 times RD (the diameter of the circle circumscribing the circular row of balls). If the diameter (OD) is equal to or larger than RD (the diameter of the circle circumscribing the circular row of balls), the insertion of the ball-cage assembly into the bore of the outer ring can be suitably effected, and therefore the lower limit of the diameter (OD) is equal to RD.

With respect to the axial dimension of the outer ring, one end surface of the outer ring may be disposed axially outwardly of an end surface of the cage or may be disposed axially inwardly of the end surface of the cage. With respect to the axial dimension of the inner ring, it is preferred that one end surface of the inner ring be disposed axially inwardly of an end surface of the cage.

The angular contact ball bearing may be of the single row type or the double row type, and any suitable materials can be used to form the outer ring, the inner ring and the balls.

In the angular contact ball bearing of the present invention, when the assembly, comprising the balls and the cage, is placed on the outer ring, the relation, 0.35Bd ≤ δA ≤ 0. 5Bd, and the relation, RD ≤ OD ≤ 1.1RD, are established where δA represents the amount of projecting of each ball from the outer ring, Bd represents the diameter of the ball, OD represents the diameter of the shoulder portion of the outer ring, and RD represents the diameter of the circle circumscribing the circular row of balls. With this construction, the ability of assembling the outer ring assembly which would otherwise be adversely affected will not be lowered.

[0027]

### BRIEF DESCRIPTION OF THE DRAWINGS

Fig. 1 is a vertical cross-sectional view showing an angular contact ball bearing according to a preferred embodiment of the present invention.
Fig. 2 is a vertical cross-sectional view showing an assembling condition of an outer ring assembly of the angular contact ball bearing of Fig. 1.
Fig. 3 is a vertical cross-sectional view showing a conventional angular contact ball bearing.
Fig. 4 is a vertical cross-sectional view showing an assembling condition of an outer ring assembly of the conventional angular contact ball bearing of Fig. 3.

### DETAILED DESCRIPTION OF PREFERRED EMBODIMENTS

A preferred embodiment of the present invention will now be described with reference to the drawings. In the following description, a right-left direction and an upward-downward direction correspond respectively to a right-left direction and an upward-downward direction in the accompanying drawings.

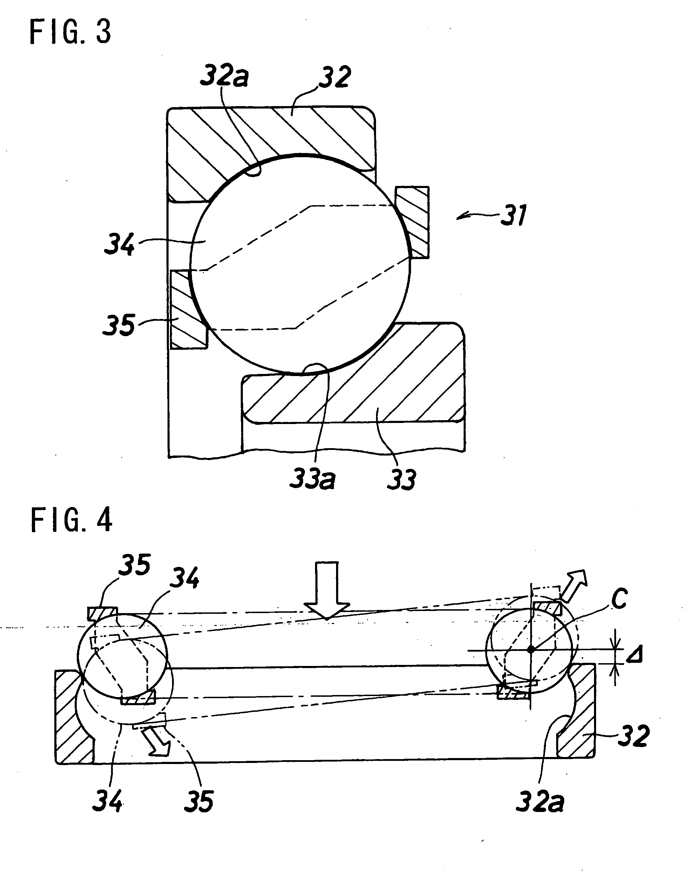

Fig. 3 shows a conventional lightweight-type angular contact ball bearing 31.

In the drawings, the angular contact ball bearing 31 includes an outer ring 32 having a raceway surface 32a formed on an inner periphery thereof, an inner ring 33 having a raceway surface 33a formed on an outer periphery thereof, a plurality of balls 34 disposed between the two rings 32 and 33 and arranged at predetermined intervals in a circumferential direction, and a conical type cage 35 for holding these balls 34.

As compared with a conventional non-lightweight type bearing, the angular contact ball bearing 31 is formed such that a right end surface (counterbore-side end surface) of the outer ring 33 is disposed axially inwardly of a right end surface (shoulder portion-side end surface) of the inner ring 33 and also axially inwardly of a right end surface of the cage 35, while a left end surface (counterbore-side end surface) of the inner ring 33 is disposed axially inwardly of a left end surface (shoulder portion-side end surface) of the outer ring 32 and also axially inwardly of a left end surface of the cage 35.

When this angular contact ball bearing 31 is to be mounted in a bearing device, the inner ring 33 is alone mounted on a rotation shaft, while a ball-cage assembly in which the balls 34 and the cage 35 are assembled together is beforehand incorporated into the outer ring 32 to provide an outer ring assembly in which the outer ring, the balls and the cage are assembled together, and this outer ring assembly is mounted on a housing or the like.

Fig. 4 shows an assembling condition of the outer ring assembly of the angular contact ball bearing 31 of Fig. 3, and when the ball-cage assembly in which the balls 34 and the cage 35 are assembled together is to be inserted into the outer ring 32, this ball-cage assembly is inclined as indicated by two dots-and-dash lines in Fig. 4, so that the assembling condition is unstable. The cause for this has been examined, and it has been confirmed that when the centers C of the balls 34 are disposed above (or outwardly of) the end surface (upper end surface) of the outer ring 32 (Δ>0) in the assembling operation shown in Fig. 4, the assembling condition becomes unstable.

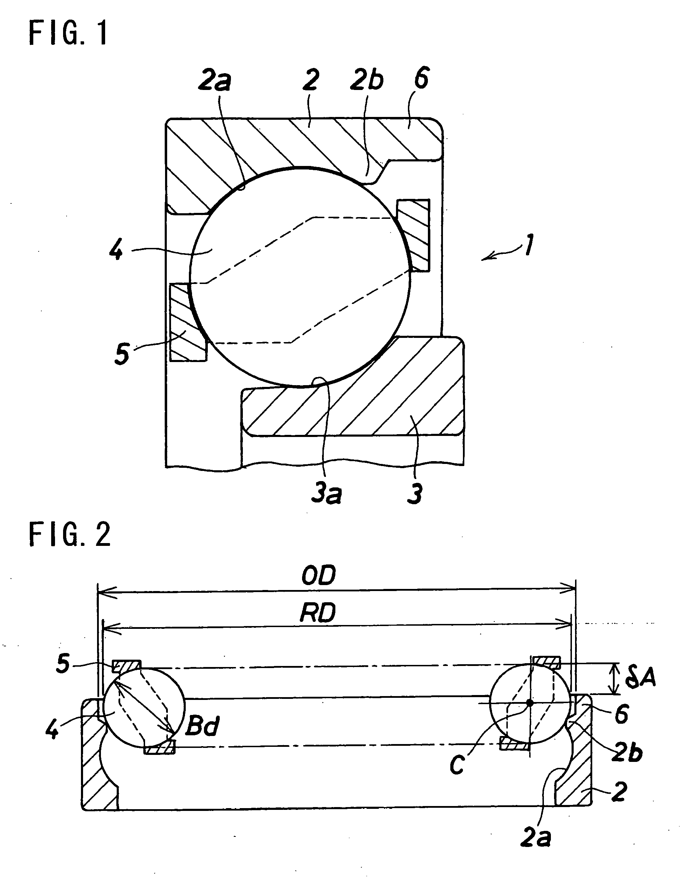

Figs. 1 and 2 show an angular contact ball bearing 1 according to the present invention which overcomes the above problem.

As shown in Fig. 1, the angular contact ball bearing 1 comprises an outer ring 2 having a raceway surface 2a formed on an inner periphery thereof, an inner ring 3 having a raceway surface 3a formed on an outer periphery thereof, a plurality of (or circular row of) balls 4 disposed between the two rings 2 and 3 and arranged at predetermined intervals in a circumferential direction, and a conical type cage 5 holding these balls 4.

The angular contact ball bearing 1 is a lightweight type bearing, and as compared with a conventional non-lightweight type bearing, this angular contact ball bearing 1 is constructed in such a manner that a right end surface (counterbore-side end surface) of the outer ring 2 is disposed axially inwardly of a right end surface (shoulder portion-side end surface) of the inner ring 3, while a left end surface (counterbore-side end surface) of the inner ring 3 is disposed axially inwardly of a left end surface (shoulder portion-side end surface) of the outer ring 2.

A guide portion 6 is formed at the right end of the outer ring 2. When an assembly (ball-cage assembly) in which the balls 4 and the cage 5 are assembled together is to be inserted into the outer ring 2, the guide portion 6 serves to guide the ball-cage assembly.

The guide portion 6 has a cylindrical shape, and extends axially outwardly from a counterbore-side smaller-diameter portion 2b of the outer ring 2 which prevents the movement of the balls 4 in the right direction. The right end surface (counterbore-side end surface) of the guide portion 6 is disposed axially inwardly of the right end surface (the shoulder portion-side end surface) of the inner ring 3. With this construction, the lightweight design is not prevented from being achieved.

The left end surface (counterbore-side end surface) of the inner ring 3 is disposed axially inwardly of.a left end surface of the cage 5 as is the case with the conventional ball bearing 31 shown in Fig. 3.

For forming the guide portion 6, attention is paid to the dimensional relation between the position of the end surface (serving as the upper end surface at the time when forming the outer ring assembly) of the outer ring 2 and the position of the center of the balls 4, and these dimensions and other associated dimensions are suitably determined so that the ability of assembling the outer ring assembly can be enhanced.

Fig. 2 shows an assembling condition of the outer ring assembly of the angular contact ball bearing 1 of Fig. 1. When the ball-cage assembly in which the balls 4 and the cage 5 are assembled together is placed on the outer ring 2 disposed horizontally as shown in Fig. 2, the ball-cage assembly is supported by the counterbore-side smaller-diameter portion 2b of the outer ring 2 since the diameter of the counterbore-side smaller-diameter portion 2b is smaller than a diameter of a circle circumscribing the circular row of balls 4 held by the cage 5. In this assembling condition, where the projecting amount of each ball 4 from the upper end surface of the outer ring 2 is represented by δA, the diameter of the ball 4 is represented by Bd, the diameter of the shoulder portion of the outer ring 2, that is, the inner diameter of the guide portion 6, is represented by OD, and the diameter of the circle circumscribing the circular row of balls 4 is represented by RD, the relation 0.35Bd ≤ δA ≤ 0.5Bd (Namely, δA is not smaller than 0.35 times Bd and is not larger than 0.5 times Bd) is satisfied so that the end surface (upper end surface) of the outer ring 2 will not be disposed above the centers C of the balls 4 held by the cage 5. Preferably, the relation 0.35Bd ≤ δA ≤ 0.45Bd (Namely, δA is not smaller than 0.35 times Bd and is not larger than 0.45 times Bd) may be satisfied.
In addition to this relation, the relation RD ≤ OD ≤ 1.1RD (Namely, OD is not smaller than RD, and is not larger than 1.1 times RD) is satisfied. Preferably, the relation RD ≤ OD ≤ 1.05RD (Namely, OD is not smaller than RD, and is not larger than 1.05 times RD) may be satisfied.
By establishing the above relations, the inclination of the ball-cage assembly as in Fig. 4 is prevented, and this solves a problem that the assembling condition becomes unstable.

Incidentally, with respect to the relation between the right end surface (axially outside end surface) of the guide portion 6 of the outer ring 2 and the right end surface (axially outside end surface) of the cage 5, when δA is set to a value close to 0.35 times BD, the right end surface (axially outside end surface) of the guide portion 6 of the outer ring 2 is offset right (axially outside) from the right end surface (axially outside end surface) of the cage 5, and when the set value of δA is close to 0.5 times Bd, the right end surface of the guide portion 6 of the outer ring 2 is offset left (axially inside) from the right end surface of the cage 5.

In the above embodiment, although the angular contact ball bearing 1 is of the single row type, the above conditions for enhancing the ability of assembling the outer ring assembly can be applied also to a multi-row angular contact ball bearing such as a double row angular contact ball bearing.

## Claims

1. An angular contact ball bearing comprising:
an inner ring including a shoulder portion-side end surface;
an outer ring which includes a counterbore-side smaller-diameter portion and a counterbore-side end surface disposed axially inwardly of the shoulder portion-side end surface of the inner ring;
a plurality of balls arranged in a circular row between the outer ring and inner rings;
a cage for holding the balls; and
a cylindrical guide portion which is provided at and communicates with the counterbore-side smaller-diameter portion and guides a ball-cage assembly in which the balls and the cage are assembled together when the ball-cage assembly is inserted into the outer ring,
wherein when the ball-cage assembly is inserted into the outer ring disposed horizontally, the ball-cage assembly is supported by the counterbore-side smaller-diameter portion and is prevented from being inclined by the guide portion.

2. The angular contact ball bearing according to claim 1,
wherein
relations 0.35Bd ≤ δA ≤ 0.5Bd and RD ≤ OD ≤ 1.1RD are satisfied,
where δA represents a projecting amount of each ball from the outer ring in a state that the ball-cage assembly is placed on the counterbore-side smaller diameter portion, Bd represents a diameter of the ball, OD represents an inner diameter of the guide portion, and RD represents a diameter of a circle circumscribing the circular row of balls.

3. The angular contact ball bearing according to claim 2,
wherein 0.35Bd ≤ δA ≤ 0.45Bd and RD ≤ OD ≤ 1.05RD are satisfied.
